# EUROPEAN PATENT APPLICATION

(11) **EP 2 431 726 A2**
(43) Date of publication of application: **21.03.2012**
(21) Application number: 11180718.6
(22) Date of filing: 09.09.2011
(51) Int. Cl.: G01M 13/02

(54) **Motor having pully and test jig thereof**

(30) Priority: 13.09.2010 KR 20100089366
(71) Applicant: LG Innotek Co., Ltd., Seoul 100-714 (KR)
(72) Inventor: Paeng, Yongseok, 100-714 SEOUL (KR)
(74) Representative: Novagraaf Technologies

(57) **Abstract**

Disclosed is a pulley of a motor configured to accurately collect data for performance test without damaging screw threads of the pulley and a test jig, wherein the motor includes a rotation shaft and the pulley coupled to a distal end of a rotation shaft, and wherein the pulley includes a jig coupling groove axially formed at a distal end in the shape of a plurality of holes, and a part of a performance test jig is axially inserted, and the test jig of the motor, the test jig connected to the pulley coupled to a distal end of the rotation shaft of the motor to measure performance test, the test jig comprising a coupling pin lengthily and axially formed at the other distal end coupled to the pulley of the test jig, and inserted into a hole formed at the pulley.

## Description

### CROSS-REFERENCE TO RELATED APPLICATION

The present application is based on, and claims priority from, Korean Application Number 10-2010-0089366, filed September 13, 2010, the disclosure of which is incorporated by reference herein in its entirety.

### BACKGROUND OF THE DISCLOSURE

### Field of the Disclosure

The present disclosure relates to a motor pulley and a test jig, and more particularly to a motor pulley configured to accurately collect data for performance test without damaging screw threads of the motor pulley and a test jig.

### Discussion of the Related Art

Generally, a motor is widely used for a machine tool including a numerically controlled lathe and a machining center, and as a steering power auxiliary device of a vehicle.

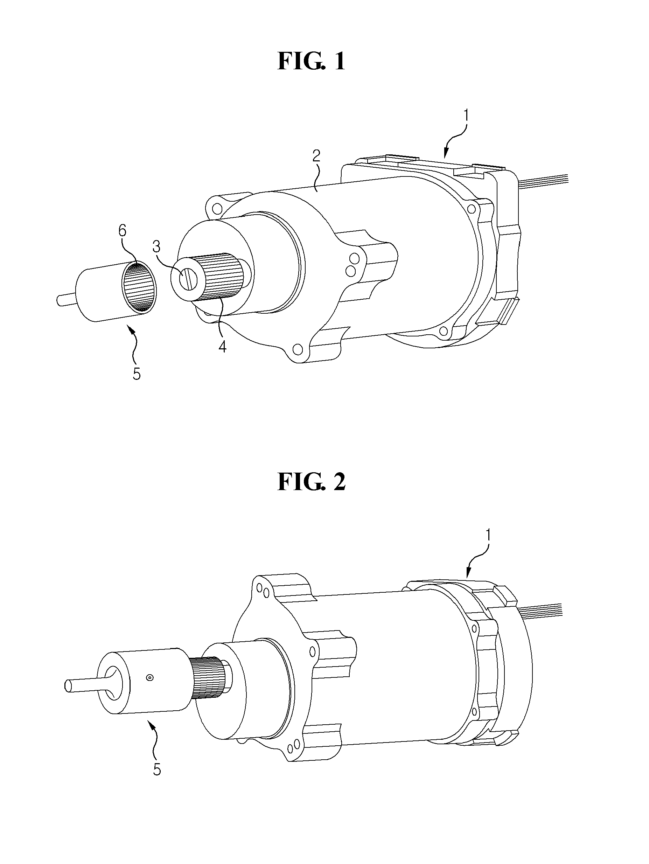

Referring to FIG.1, a motor (1) is encased in a motor housing (2). The motor housing (2) accommodates parts that generate electric power using an electromagnetic force, and substantially takes the shape of a cylinder.

A rotation shaft (3) is arranged through the motor housing (2) and is also arranged at a periphery thereof with a rotor (not shown). An inner circumferential area of the motor housing (2) corresponding to an area of the rotor is coupled with a stator. In a case a current is applied to the rotor or the stator, the rotation shaft (3) is rotated by electric interaction to generate an electric power.

A pulley (4) is coupled to a distal end side of the rotation shaft (3) to transmit the power to other devices. The pulley (4) is rotated along with the rotation shaft (3) to transmit the power, without loss of power, through screw threads.

Once manufacturing of the motor (1) is completed, a performance test on the motor is conducted, where a test jig (5) having a shape corresponding to that of the pulley (4) is employed to collect data necessary for performance test.

One side of the test jig (5) is formed with an opening, and an inner circumferential surface of the test jig (5) is formed with a screw groove (6) corresponding to the screw thread of the pulley (4), where the screw threads and the screw grooves are meshed and rotated to send a rotation data to testing equipment.

However, the testing method thus mentioned may disadvantageously generate cracks or scratches on the screw threads due to excessive load by the testing equipment and knocking and shock in response to rotation directions. If a motor damaged thereby is mounted as a power source, durability is decreased to generate noise and vibration.

Another disadvantage is that rust may be generated from parts where damages are inflicted during storage or transportation of the finished product of a motor.

### BRIEF SUMMARY

The present disclosure is directed to cope with the abovementioned problems and it is an object of the present disclosure to provide a motor pulley configured to accurately collect data for performance test without damaging screw threads of the motor pulley and a test jig.

Technical problems to be solved by the present disclosure are not restricted to the above-mentioned description, and any other technical problems not mentioned so far will be clearly appreciated from the following description by the skilled in the art.

In one general aspect of the present disclosure, there is provided a motor including a rotation shaft and a pulley coupled to a distal end of the rotation shaft, wherein the pulley includes a jig coupling groove axially formed at a distal end in the shape of a plurality of holes, and a part of a performance test jig is axially inserted.

Preferably, the jig coupling holes are arranged each at an equal distance by being adjacent to a periphery of the pulley.

Preferably, three jig coupling holes are formed.

In another general aspect of the present disclosure, there is provided a test jig of a motor, the test jig connected to a pulley coupled to a distal end of a rotation shaft of a motor to measure performance test, the test jig comprising a coupling pin lengthily and axially formed at the other distal end coupled to the pulley of the test jig, and inserted into a hole formed at the pulley.

Preferably, the coupling pin takes the shape of a cylinder.

The pulley of a motor thus configured according to the present disclosure is advantageous in that a jig coupling hole is formed at the pulley of the motor, and a coupling pin is formed at a test jig corresponding thereto to be axially inserted, whereby damages to screw threads that have occurred to the prior art can be completely eliminated.

Another advantage is that test jig and a pulley are applied to solve the conventional problems and to increase productivity, the conventional problems being the increased machining processes, the difficulty in accurate arrangement and increased consumption of raw materials due to formation of an opening for insertion of the pulley to the test jig.

### BRIEF DESCRIPTION OF THE DRAWINGS

The accompanying drawings, which are included to provide a further understanding of the present disclosure and are incorporated in the present disclosure and constitute a part of this application, and together with the description, serve to explain the principle of the disclosure. In the drawings:
FIG. 1 is a perspective view illustrating a motor and a test jig according to prior art;
FIG. 2 is a perspective view illustrating a state in which a motor and a test jig are coupled according to prior art;
FIG. 3 is a perspective view illustrating a motor and a test jig according to the present disclosure;
FIG. 4 is a perspective view illustrating a test jig according to the present disclosure; and
FIG. 5 is a lateral view illustrating a state in which a pulley and a test jig are coupled according to the present disclosure.

### DETAILED DESCRIPTION

Advantages and features of the present invention may be understood more readily by reference to the following detailed description of exemplary embodiments and the accompanying drawings. Detailed descriptions of well-known functions, configurations or constructions are omitted for brevity and clarity so as not to obscure the description of the present disclosure with unnecessary detail. Thus, the present disclosure is not limited to the exemplary embodiments which will be described below, but may be implemented in other forms. In the drawings, the width, length, thickness, etc. of components may be exaggerated or reduced for the sake of convenience. Furthermore, throughout the descriptions, the same reference numerals will be assigned to the same elements in the explanations of the figures, and explanations that duplicate one another will be omitted. Accordingly, the meaning of specific terms or words used in the specification and claims should not be limited to the literal or commonly employed sense, but should be construed or may be different in accordance with the intention of a user or an operator and customary usages. Therefore, the definition of the specific terms or words should be based on the contents across the specification. The terms "a" and "an" herein do not denote a limitation of quantity, but rather denote the presence of at least one of the referenced item.

As may be used herein, the terms "substantially" and "approximately" provide an industry-accepted tolerance for its corresponding term and/or relativity between items. Such an industry-accepted tolerance ranges from less than one percent to ten percent and corresponds to, but is not limited to, component values, angles, et cetera. Such relativity between items ranges between less than one percent to ten percent. As may be used herein, the term "substantially negligible" means there is little relative difference, the little difference ranging between less than one percent to ten percent.

Now, a motor pulley and a motor test jig according to exemplary embodiments of the present disclosure will be described in detail with reference to the accompanying drawings.

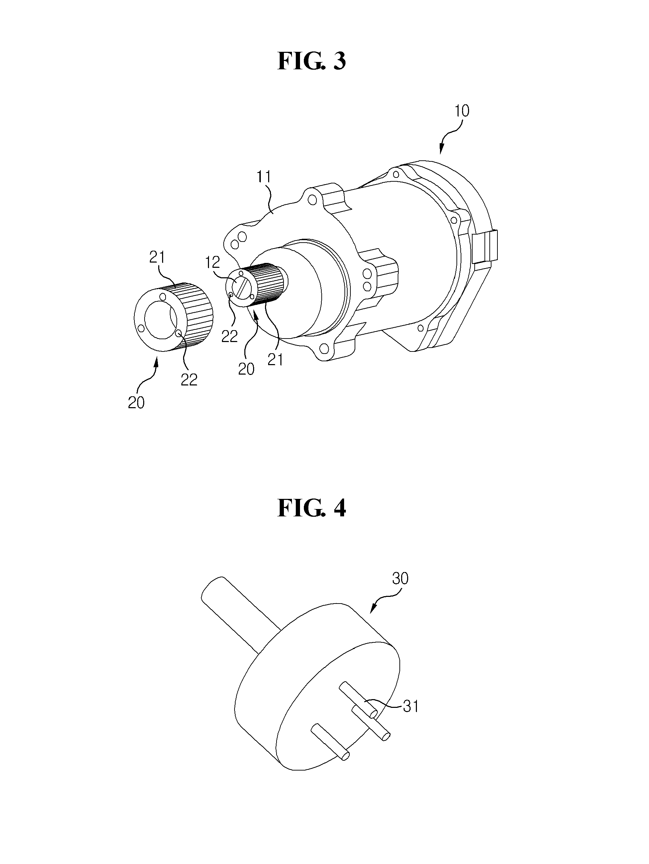

FIG.3 is a perspective view illustrating a motor and a test jig according to the present disclosure.

The structure of a motor (10) may be applied with various shapes of a conventional motor, such that detailed explanation thereto will be omitted.

Meanwhile, a portion that transmits a power to a rotation shaft (12) of a motor (10) is defined as a distal end, and an opposite side of the distal end is defined as the other distal end, and a lengthwise direction of the rotation shaft (12) is defined as an axial direction.

A distal end side of the motor (10) is protrusively coupled with the rotation shaft (12), and a pulley (20) is coupled to a distal end of the rotation shaft (12) to directly transmit an electric power to the rotation shaft.

It should be apparent that the pulley (20) may be press-fitted to the rotation shaft (12), may be coupled using a separate coupling means and may be integrally manufactured.

A periphery of the pulley (20) is arranged with screw threads for reducing the power loss, and the screw threads may be meshed with gears or may be connected to a belt for power transmission and gear shift.

According to the concept of the present disclosure, a surface of the distal end of the pulley (20) is formed with a hole, which is a jig coupling hole (22) for coupling a jig (described later), and substantially axially takes the shape of a cylinder.

Furthermore, the jig coupling hole (22) is formed at one cross-sectional surface adjacent to the periphery of the pulley (20), and in a case the pulley (20) and the rotation shaft (12) are integrally formed, a jig coupling hole (22) may be formed at a central axis.

In this case, the jig coupling hole (22) may selectively take various shapes including, but not limited thereto, an oval shape, a polygonal shape or a gear, in addition to a circle, for transmission of rotational force.

Meantime, in a case the jig coupling hole (22) is formed at one cross-sectional surface adjacent to the periphery of the pulley (20), it is preferable that each of the jig coupling holes (22) be formed at an equal distance from the other hole (22). Preferably, the number of jig coupling holes (22) is three, but it should be apparent that the number of jig coupling holes (22) can be selectively chosen in consideration of torque or rotational speed.

For example, in a case the rotational speed is very high and the torque is very great, or in a case a shock from shift is great during test, the number of jig coupling holes (22) is preferably increased. In this case, an inner diameter of each jig coupling hole (22) is preferably increased.

Meanwhile, FIG.4 is a perspective view illustrating a test jig according to the present disclosure.

It should be noted that a test jig (30) is not formed at the other distal end with an opening, unlike the prior art. That is, the test jig (30) according to the present disclosure takes the shape of a planar surface at the other cross-sectional surface, and a coupling pin (31) is formed that is axially protruded.

Each of the coupling pin (31) is formed in correspondence with the shape and arrangement of the jig coupling hole (22). On the drawing, three cylindrical coupling pins (31) are formed in response to the arrangement of the jig coupling holes (22). Furthermore, the coupling pin (31) may be integrally formed with the test jig (30) through injection molding method.

In a case a cross-sectional surface of the jig coupling hole (22) does not take the shape of a circle, that is, the cross-sectional surface of the jig coupling hole (22) takes the shape of a an oval shape, a polygonal shape or a gear, it should be apparent that the shape of the cross-sectional shape takes the shape corresponding thereto.

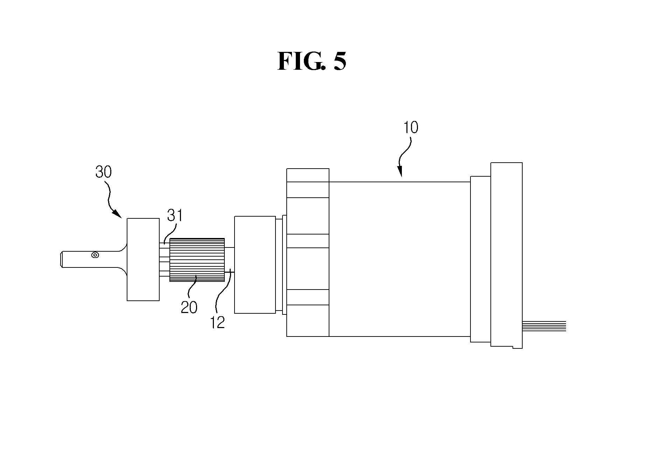

FIG.5 is a lateral view illustrating a state in which a pulley and a test jig are coupled according to the present disclosure.

According to concept of the present disclosure, the pulley (20) of a motor is formed with a jig coupling hole (22), and the test jig (30) is formed with a coupling pin (31) in correspondence thereto for axial insertion, whereby damages of screw threads that occur during testing process can be advantageously removed.

Another advantage is that a test jig (30) and a pulley (20) are applied to solve the conventional problems and to increase productivity, the conventional problems being the increased machining processes, the difficulty in accurate arrangement and increased consumption of raw materials due to formation of an opening for insertion of the pulley to the test jig.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims.

## Claims

1. A motor comprising:
a rotation shaft; and
a pulley coupled to a distal end of the rotation shaft,
wherein the pulley includes a jig coupling groove axially formed at a distal end in the shape of a plurality of holes, and a part of a performance test jig is axially inserted.

2. The motor of claim 1, wherein the jig coupling holes are arranged each at an equal distance by being adjacent to a periphery of the pulley.

3. The motor of claim 1, wherein three jig coupling holes are formed.

4. The motor of claim 2, wherein three jig coupling holes are formed.

5. A test jig of a motor, the test jig connected to a pulley coupled to a distal end of a rotation shaft of a motor to measure performance test, the test jig comprising:
a coupling pin lengthily and axially formed at the other distal end coupled to the pulley of the test jig and inserted into a hole formed at the pulley.

6. The test jig of claim 5, wherein the coupling pin takes the shape of a cylinder.
